# EUROPÄISCHE PATENTSCHRIFT

(11) **EP 1 890 552 B1**
(45) Veröffentlichungstag und Bekanntmachung des Hinweises auf die Patenterteilung: **16.12.2009**
(21) Anmeldenummer: 06743125.4
(22) Anmeldetag: 08.06.2006
(51) Int. Cl.: A22B 7/00

(54) **ANORDNUNG ZUM TRANSPORTIEREN EINES SCHLACHTTIERES**
ARRANGEMENT FOR TRANSPORTING A SLAUGHTERED ANIMAL
DISPOSITIF SERVANT A TRANSPORTER UN ANIMAL DE BOUCHERIE

(30) Priorität: 08.06.2005 DE 202005009048 U
(43) Veröffentlichungstag der Anmeldung: 27.02.2008
(73) Patentinhaber: Banss Schlacht- und Fördertechnik GmbH, 35216 Biedenkopf (DE)
(72) Erfinder: STARK, Marek, 35083 Wetter (DE); MÜLLER, Christian, 35216 Biedenkopf (DE); SCHÄFER, Hermann, 35094 Lahntal (DE); SCHMIDT, Frank, 35232 Dautphetal (DE)
(74) Vertreter: Stoffregen, Hans-Herbert
(86) Internationale Anmeldenummer: PCT/EP2006/005442
(87) Internationale Veröffentlichungsnummer: WO 2006/131342

(56) Entgegenhaltungen:
- DE-C- 805 353
- GB-A- 1 212 259
- US-A- 2 652 589
- US-A- 4 071 924
- US-B1- 6 244 951

## Beschreibung

Die Erfindung bezieht sich auf eine. Anordnung zum Transportieren eines Schlachttieres wie geschlachtetes Schwein umfassend eine Transportbahn wie Rohrbahn mit entlang dieser verschiebbarem Haken, der über ein eine vertikal oder in etwa vertikal verlaufende Drehachse aufweisendes Drehgelenk mit einer Schlachtspreize verbunden ist, an deren jeweiligem Ende eines der Hinterfüße des Schlachttieres befestigbar ist, wobei entlang der Transportbahn und entlang einer Seite der Schlachtspreize eine erste Führung und beabstandet zu der ersten Führung und entlang der Transportbahn eine einen Führungskanal für die Schlachtspreize begrenzende zweite Führung verläuft.

Entsprechende Anordnungen sind Abschnitte in Schlachtstraßen, um die Vorderfüße eines Schlachttieres z. B. abzuschneiden, Bauch- und Brustbereich zu öffnen oder den Enddarm freizuschneiden. Bei den üblicherweise von Hand durchzuführenden Arbeiten dient die erste Führung dazu, die Schlachtspreize - auch Joch genannt - gegen ein Verdrehen zu stabilisieren, um das Schlachttier in einer günstigen Bearbeitungsposition zu halten.

Werden Schlachttiere mit Automaten bzw. Handhabungsgeräten wie Robotern bearbeitet, so ist zu beobachten, dass die Schlachttiere nicht hinreichend stabilisiert sind, sondern u. a. eine Pendelbewegung um eine Achse ausüben, die durch den Auflagepunkt des Hakens auf der Transportbahn vorgegeben wird. Des Weiteren tritt eine eine genaue Bearbeitung nicht ermöglichende Drehung des Schlachttieres dann auf, wenn dieses von der Seite her bearbeitet wird, auf der die erste Führung verläuft.

Die DE-T-692 02 043 bezieht sich auf ein Verfahren und eine Vorrichtung zum Verarbeiten von Schlachttierkörpern. Um eine exakte Positionierung der Körper relativ zu Verarbeitungselementen zu erzielen, sind von Halteplatten ausgehende Arbeitszylinder mit Stoppern verbunden, um Fleischhaken präzise quer zum Transportweg auszurichten.

Gegenstand der FR-A-2 662 582 ist eine Vorrichtung zum Ausrichten von Schlachtspreizen mittels Führungsbalken, die mit der Oberseite der Spreizen wechselwirken. Hierdurch soll ein Pendeln unterbunden werden.

Aus der US-A-4,011,820 sind ein Verfahren und eine Vorrichtung zum Stabilisieren und Positionieren von Aufhängungen von Schlachttieren bekannt. Entlang der Transportbahn sind Führungsplatten sowie verschwenkbare Bolzen vorgesehen, zwischen denen ein Haken führbar ist. Von diesem geht eine Kette aus, die um ein Bein eines Schlachttieres geschlungen ist. Konstruktionsbedingt kann ein Drehen des Schlachttieres erfolgen.

Die US-A-3,111,706 beschreibt eine Transportvorrichtung für Schlachttiere, bei der eine Hülse in einem Führungskanal geführt wird, die von einer Kette durchsetzt wird, an der ein Bein eines Schlachttieres befestigt ist. Durch die Geometrie der Hülse bedingt kann ein Drehen um deren Längsachse erfolgen.

Um eine Schlachtspreize zu stabilisieren, stützen sich nach der WO-A-00/74491 symmetrisch zum Aufhängepunkt an den Oberseiten der Spreize über Zylinder verstellbare Blöcke ab.

Die BE-A-1007533 bezieht sich auf eine Fördervorrichtung für Schweine, deren Hinterbeine von einer Spreize ausgehen.

Um ein Pendeln eines Schlachttieres bei dessen Bearbeitung zu vermeiden, werden nach der EP-A-247 763 die von einer Spreize ausgehenden Hinterbeine an einem Führungsrohr entlang bewegt.

Die WO-A-00/27212 bezieht sich auf ein Verfahren und eine Vorrichtung zum Dämpfen eines Schwingens eines Schlachttieres. Hierzu befindet sich im Transportweg des Schlachttieres eine verschwenkbare Platte, die auf das Schlachttier im erforderlichen Umfang einwirkt.

Aus der GB-A-1 212 259 ist ein Fördersystem für Geflügel bekannt. Das Geflügel wird von einer Halterung aufgenommen, die ihrerseits entlang einer von parallel zueinander verlaufenden Rohren gebildeten Führung transportiert wird.

Um Geflügel von von einer Förderbahn ausgehenden Transporthaken zu lösen, werden die Schenkel der geschlachteten Tiere entlang einer Führungsschiene bewegt, um ein Lösen zu ermöglichen.

Aus der DE-C-10 805 353 ist eine Schlachtspreize bekannt, die drehbar aufgehängt ist. Um ein unerwünschtes Hochschlagen der Spreize zu vermeiden, sind oberhalb der Arme der Spreize Winkeleisen vorgesehen.

Der vorliegenden Erfindung liegt die Aufgabe zu Grunde, eine Anordnung der eingangs genannten Art so weiterzubilden, dass während des Transportes sichergestellt ist, dass das Schlachttier optimale Bearbeitungspositionen einnimmt und in diesen während des Bearbeitens verbleibt.

Erfindungsgemäß wird die Aufgabe im Wesentlichen dadurch gelöst, dass zum Verhindern oder weitgehenden Verhindern einer Pendelbewegung des Schlachttieres in Richtung des Transportweges des Schlachttieres die zweite Führung zumindest abschnittsweise unmittelbar oberhalb der an der Schlachtspreize befestigten Hinterfüße verläuft.

Erfindungsgemäß verlaufen zu beiden Seiten der Schlachtspreize Führungen, die sicherstellen, dass unabhängig davon, von welcher Seite das Schlachttier bearbeitet wird, die Schlachtspreize nicht quer zur Transportrichtung ausweichen kann und folglich auch keine Drehung um das Drehgelenk des Hakens möglich ist.

Mit anderen Worten weist der Führungskanal eine quer zur Transportrichtung des Schlachttieres verlaufende Breite auf, die ein Drehen des Schlachttieres um die Achse des Drehgelenkes verhindert oder nahezu verhindert.

Durch die Gestaltung der zweiten Führung unterbleibt eine Pendelbewegung des Schlachttieres um die durch die Abstützung des Hakens auf der Transportbahn vorgegebene Achse, also in Richtung der Transportrichtung indem die zweite Führung unmittelbar oberhalb der an der Schlachtspreize befestigten Hinterfüße des Schlachttieres verläuft. Hierzu kann die zweite Führung ein Flachelement wie eine Leiste umfassen bzw. als eine solche ausgebildet sein, wobei das Flachelement eine Ebene aufspannt, die quer bzw. senkrecht zur von der Schlachttierspreize aufgespannten Ebene verläuft.

Durch den Verlauf der zweiten Führung werden die Hinterfüße und damit das Schlachttier derart ausgerichtet, dass ein Pendeln unterbunden wird.

Um sicherzustellen, dass die zweite Führung beim Einbringen des Schlachttieres in den Führungskanal eine Behinderung nicht darstellt, nämlich insbesondere dann, wenn das Schlachttier zuvor eine pendelnde Bewegung ausüben sollte, ist vorgesehen, dass die zweite Führung führungskanaleinlaufseitig rampenförmig verläuft. Der rampenförmige Verlauf ist dabei dergestalt, dass das freie Ende der zweiten Führung einen bogenförmigen Verlauf zeigt, wobei der Abstand in Richtung des Transportweges zu der Schlachtspreize hin abnimmt.

Die erste Führung ist in bekannter Weise vorzugsweise ein Rohr oder ein Rundstahl. Unabhängig hiervon sollte die erste und/oder die zweite Führung aus Edelstahl bestehen.

Durch die erfindungsgemäße Lehre wird eine optimale Fixierung des Schlachttierkörpers ermöglicht, so dass eine problemlose und präzise Bearbeitung mit Automaten bzw. Handhabungsgeräten möglich wird. Mit konstruktiv einfachen Maßnahmen, nämlich dem zusätzlichen Installieren der vorzugsweise als Leiste ausgebildeten zweiten Führung, wird ein Verdrehen der Schlachtspreize während der Bearbeitung und gleichzeitig ein Pendeln des Schlachttieres verhindert.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden Ausführungsbeispiels.

Es zeigen:
- Fig. 1: einen Schnitt durch eine Bearbeitungsstraße eines Schlachthofes,
- Fig. 2: die Ansicht "A" in Fig. 1 und
- Fig. 3: ein Detail.

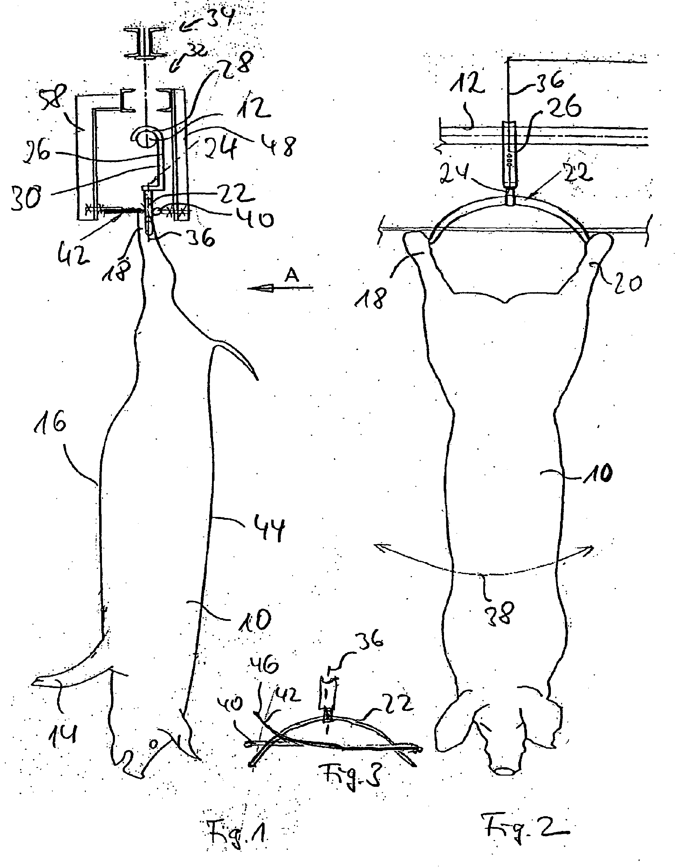

In den Fig. ist ein Ausschnitt einer Schlachtstraße dargestellt, in der ein Schlachttier 10 wie geschlachtetes Schwein hängend entlang einer Transportbahn 12 wie Rohrbahn transportiert wird, um bearbeitet zu werden. Hierzu können das Abschneiden der Vorderbeine 14, das Freischneiden des Enddarms, das Öffnen des Bauch- oder Brustbereichs 16 oder weitere Bearbeitungsprozesse gehören. Das Schlachttier 10 ist dabei mit seinen Hinterfüßen 18, 20 an einer Schlachtspreize 22, die auch als Joch bezeichnet werden kann, gespreizt aufgehängt, wie insbesondere die Fig. 2 verdeutlicht. Bei der Schlachtspreize 22 handelt es sich um ein hinlänglich bekanntes gebogenes Element, ohne dass es eines näheren Eingehens bedarf.

Die Schlachtspreize 22 ist über ein Drehgelenk 24 mit einem Haken 26 verbunden, der mit einem gebogenen Abschnitt 28 auf der Transportbahn 12 aufliegt. Das Drehgelenk 24 geht sodann von dem kurzen Schenkel eines L-förmigen Abschnitts 30 des Transporthakens 26 aus. Der Haken 26 wird über nicht dargestellte Mitnehmer eines Kettenförderers oder einer Laufkatze entlang der Transportbahn 12 verschoben, die von oberhalb der Transportbahn 12 verlaufenden Profilen 32 bzw. 34 in gewohnter Weise ausgehen. Insoweit wird auf hinlänglich bekannte Konstruktionen verwiesen.

Um ein Drehen der Schlachtspreize 22 um die von dem Drehgelenk 24 vorgegebene vertikal oder im Wesentlichen vertikal verlaufende Achse 36 und auch ein Pendeln (Doppelpfeil 38) zum die durch die Auflage des Hakens 26 auf der Transportbahn 12 vorgegebene Achse zu verhindern, wird die Schlachtspreize 22 innerhalb eines Führungskanals während des Bearbeitens bewegt, der von einer ersten Führung 40 und einer zweiten Führung 42 begrenzt ist. Kann die erste Führung 40 z. B. ein Rohr oder ein Rundstahl sein, so sollte die zweite Führung 42 eine Leistengeometrie aufweisen, die eine Ebene aufspannt, die horizontal verläuft, also senkrecht zu der von der Schlachtspreize 22 aufgespannten Ebene.

Durch die Gestaltung der zweiten Führung 42 und dessen Verlauf unmittelbar oberhalb der Hinterfüße 18, 20 kann das Schlachttier 10 eine Pendelbewegung nicht ausüben, da die Hinterfüße 18, 20 durch die zweite Führung 42 entsprechend ausgerichtet werden. Gleichzeitig wird durch den lichten Abstand zwischen der ersten Führung 40 und der zweiten Führung 42, die an die Breite der Schlachtspreize 22 angepasst ist, ein Drehen um die Achse 36 verhindert. Somit kann ein problemloses Bearbeiten des Schlachttieres 10 sowohl von der Bauchseite 16 als auch von der Rückenseite 44 her erfolgen, ohne dass die Schlachtspreize 22 ausweichen und sich somit um die Achse 36 drehen kann. Durch die Gestaltung der zweiten Führung 42 vorzugsweise in Form einer Leiste ist erwähntermaßen des Weiteren ein Pendeln unterbunden. Dabei kann die Leiste einen Querschnitt von z. B. 80 x 5 mm oder 100 x 6 mm haben, um nur beispielhaft Zahlen zu nennen.

Um sicherzustellen, dass beim Einführen des Schlachttieres 10 in den von der ersten und zweiten Führung 40, 42 gebildeten Führungskanal eine Pendelbewegung des Schlachttieres 10 abgebremst wird, ohne dass die zweite Führung 42ein Hindernis darstellt, ist die zweite Führung 42 einlaufseitig rampenförmig ausgebildet, wie die Prinzipdarstellung gemäß Fig. 3 verdeutlicht. Der Ausschnitt zeigt die erste Führung 40 sowie die zweite Führung 42, also den von der ersten und zweiten Führung 40, 42 begrenzten Führungskanal mit zwischen diesen verlaufender Schlachtspreize 22.

Führungskanaleinlaufseitig ist die zweite Führung 42 nach oben von dem Transportweg weggebogen (Abschnitt 46), so dass infolgedessen die zweite Führung 42 einen rampenförmigen Verlauf zeigt. Hierdurch ist sichergestellt, dass auch ein pendelndes Schlachttier mit seinem in Transportrichtung vorderem Hinterfuß 20 nicht mit der zweiten Führung 42 verhaken kann.

Wie die Prinzipdarstellung der Fig. 1 verdeutlicht, gehen sowohl die erste Führung 40 als auch die zweite Führung 42 von Halterungen 48, 50 aus, die mit den Profilen 32 verbunden sind. Andere Konstruktionen sind selbstverständlich gleichfalls möglich.

## Patentansprüche

1. Anordnung zum Transportieren eines Schlachttieres (10), wie geschlachtetes Schwein, umfassend eine Transportbahn (12), wie Rohrbahn, mit entlang dieser verschiebbarem Haken (26), der über ein eine vertikal oder in etwa vertikal verlaufende Achse (36) aufweisendes Drehgelenk (26) mit einer Schlachtspreize (22) verbunden ist, an deren jeweiligem Ende eines der Hinterfüße (18, 20) des Schlachttieres (10) befestigbar ist, wobei entlang der Transportbahn und entlang einer Seite der Schlachtspreize eine erste Führung (40) und beabstandet zu der ersten Führung (40) und entlang der Transportbahn (12) eine einen Führungskanal für die Schlachtspreize (22) begrenzende zweite Führung (42) verläuft,
**dadurch gekennzeichnet,**
**dass** zum Verhindern oder weitgehenden Verhindern einer Pendelbewegung des Schlachttieres (10) in Richtung des Transportweges des Schlachttieres die zweite Rührung (42) zumindest abschnittsweise unmittelbar oberhalb der an der Schlachtspreize (22) befestigten Hinterfüße (18,20) verläuft.

2. Anordnung nach Anspruch 1,
**dadurch gekennzeichnet,**
**dass** der Führungskanal eine quer zur Transportrichtung des Schlachttieres (10) verlaufende Breite aufweist, die ein Drehen des Schlachttieres um die Achse (36) des Drehgelenks (26) verhindert oder weitgehend verhindert.

3. Anordnung nach zumindest einem der vorhergehenden Ansprüche,
**dadurch gekennzeichnet,**
**dass** die zweite Rührung (42) ein Flachelement wie eine Leiste ist oder eine solche umfasst, das eine Ebene aufspannt, die quer bzw. senkrecht zur von der Schlachtspreize (22) aufgespannten Ebene verläuft

4. Anordnung nach zumindest einem der vorhergehenden Ansprüche,
**dadurch gekennzeichnet,**
**dass** die zweite Führung (42) führungskanal einlaufseitig rampenförmig verläuft**.**

5. Anordnung nach zumindest einem der vorhergehenden Ansprüche**,**
**dadurch gekennzeichnet,**
**dass** die erste und/oder zweite Führung (40, 42) aus Edelstahl besteht.

6. Anordnung nach zumindest einem der vorhergehenden Ansprüche,
**dadurch gekennzeichnet,**
**dass** die erste Führung (40) ein Rohr oder ein Rundstahl ist.

## Claims

1. Arrangement for transport of a slaughtered animal (10) such as a slaughtered pig, comprising a transportation track (12) such as a tubular track with hook (26) slidable along said track and connected by a swivel joint (24) having a vertical or approximately vertical axis (36) to a carcass spreader (22) at each end of which one of the hind feet (18, 20) of the slaughtered animal (10) can be attached, where along the transportation track and along one side of the carcass spreader runs a first guide (40), and at a distance to said first guide (40) and along the transportation track (12) runs a second guide (42) limiting a guide channel for the carcass spreader (22),
**wherein**
for preventing or largely preventing a swinging motion of the slaughtered animal (10) in the direction of the transportation path of the slaughtered animal the second guide (42) is at least in some sections directly above the hind feet (18, 20) attached to the carcass spreader (22).

2. Arrangement according to Claim 1,
**wherein**
the guide channel has a width running transversely to the transportation direction of the slaughtered animal (10) that prevents or largely prevents turning of the slaughtered animal about the axis (36) of the swivel joint (24).

3. Arrangement according to at least one of the preceding claims,
**wherein**
the second guide (42) is a flat element such as a strip or comprises such a strip and spans a plane that is transverse or vertical to the plane spanned by the carcass spreader (22).

4. Arrangement according to at least one of the preceding claims,
**wherein**
the second guide (42) on the guide channel inlet side is ramp-like.

5. Arrangement according to at least one of the preceding claims,
**wherein**
the first and/or the second guide (40, 42) comprises special steel.

6. Arrangement according to at least one of the preceding claims,
**wherein**
the first guide (40) is a tube or a round steel bar.

## Revendications

1. Dispositif servant à transporter un animal de boucherie (10), tel qu'un porc abattu, comprenant une voie de transport (12), telle qu'une voie tubulaire, avec un crochet (26) pouvant être déplacé le long de cette voie de transport, et qui est relié, par l'intermédiaire d'une articulation rotative (26) présentant un axe (36) vertical ou approximativement vertical, à un système d'écartement d'animal de boucherie (22) à chaque extrémité duquel un des pieds arrière (18, 20) de l'animal de boucherie (10) peut être accroché, sachant qu'une première unité de guidage (40) s'étend le long de la voie de transport et le long d'un côté du système d'écartement d'animal de boucherie et qu'un deuxième dispositif de guidage (42) délimitant un canal de guidage pour le système d'écartement d'animal de boucherie (22) s'étend le long de la voie de transport (12), à distance de la première unité de guidage (40),
**caractérisé en ce**
**que** la seconde unité de guidage (42) s'étend au moins en partie directement au-dessus des pieds arrière (18, 20) accrochés au système d'écartement d'animal de boucherie (22), pour empêcher complètement ou en grande partie un mouvement de balancier de l'animal de boucherie (10) dans son sens de transport.

2. Dispositif selon la revendication 1,
**caractérisé en ce**
**que** le canal de guidage présente une largeur s'étendant transversalement à la direction de transport de l'animal de boucherie (10), laquelle largeur empêche entièrement ou en grande partie une rotation de l'animal de boucherie autour de l'axe (36) de l'articulation rotative (26).

3. Dispositif selon au moins l'une des revendications précédentes,
**caractérisé en ce**
**que** la deuxième unité de guidage (42) est ou comprend un élément plat, tel qu'une baguette, qui forme un plan s'étendant transversalement et verticalement par rapport au plan formé par le système d'écartement d'animal de boucherie (22).

4. Dispositif selon au moins l'une des revendications précédentes,
**caractérisé en ce**
**que** la deuxième unité de guidage (42) s'étend en forme de rampe du côté de l'entrée du canal de guidage.

5. Dispositif selon au moins l'une des revendications précédentes,
**caractérisé en ce**
**que** la première et/ou deuxième unité(s) de guidage (40, 42) est (sont) en acier spécial.

6. Dispositif selon au moins l'une des revendications précédentes,
**caractérisé en ce**
**que** la première unité de guidage (40) est un tube ou un rond en acier.
